# EUROPÄISCHE PATENTANMELDUNG

(11) **EP 1 990 110 A1**
(43) Veröffentlichungstag der Anmeldung: **12.11.2008**
(21) Anmeldenummer: 07405136.8
(22) Anmeldetag: 08.05.2007
(51) Int. Cl.: B21D 43/02, B65G 47/244

(54) **Zentriervorrichtung für flächige Werkstücke in einer Presse und Verfahren zum Einrichten einer solchen Zentriervorrichtung**

(71) Anmelder: Güdel Group AG, 4900 Langenthal (CH)
(72) Erfinder: Gerber, Markus, 3362 Niederönz (CH); Stauffer, Adrian, 4900 Langenthal (CH); Müller, Martin, 6130 Willisau (CH)
(74) Vertreter: Rüfenacht, Philipp Michael

(57) **Zusammenfassung**

Eine Zentriervorrichtung (1) für flächige Werkstücke, insbesondere für in einer Presse zu verarbeitende Platinen aus Blech, umfasst einen ersten, um eine erste vertikale Achse (90) drehbaren Tisch (100.1) zur Werkstückaufnahme und einen zweiten, um eine zweite vertikale Achse (90) drehbaren Tisch (100.2) zur Werkstückaufnahme. Der zweite Tisch (100.2) ist seitlich neben dem ersten Tisch (100.1) angeordnet, und eine Trageebene des ersten Tischs (100.1) stimmt mit einer Trageebene des zweiten Tischs (100.2) im Wesentlichen überein. Die Vorrichtung umfasst weiter einen Drehmechanismus (45, 46, 50, 61), welcher derart mit dem ersten Tisch (100.1) und mit dem zweiten Tisch (100.2) mechanisch gekoppelt ist, dass sich der erste und der zweite Tisch (100.1, 100.2) gemeinsam um eine dritte vertikale Achse (50) drehen lassen. Werden beide Tische (100.1, 100.2) gemeinsam um die dritte vertikale Achse (50) gedreht, so bilden die Tische (100.1, 100.2) eine gemeinsame Tragefläche. In der anderen Betriebsart werden die Tische einzeln um die beabstandeten vertikalen Drehachsen (90) gedreht; die Tische und deren Trageflächen bewegen sich somit relativ zueinander. Mit der erfindungsgemässen Vorrichtung lassen sich somit ohne Umbauarbeiten sowohl ein einzelnes Werkstück, welches die gesamte Breite der Zentriervorrichtung (1) beanspruchen kann, als auch gleichzeitig zwei Werkstücke geringerer Breite für die nachfolgende Bearbeitung korrekt orientieren.

## Beschreibung

### Technisches Gebiet

Die Erfindung betrifft eine für flächige Werkstücke, insbesondere für in einer Presse zu verarbeitende Platinen aus Blech. Die Erfindung betrifft weiter ein Verfahren zum Einrichten einer Zentriervorrichtung.

### Stand der Technik

In einer Presse (z. B. einer Mehrstationenpresse oder Presselinie) werden oft vorgestanzte Blechteile, so genannte Platinen, weiter bearbeitet. Bevor die eigentliche Bearbeitung in der Presse erfolgt, müssen die angeförderten Platinen in der Regel abgestapelt bzw. vereinzelt, gewaschen und gegebenenfalls beölt werden. Damit die Platinen in der Presse präzise weiter bearbeitet werden können, müssen sie nach den erwähnten Arbeitsgängen vor dem Einführen in die Presse präzise positioniert und mit einer vorgegebenen Ausrichtung orientiert werden.

Die Positionierung und Ausrichtung erfolgt oft mit bekannten Zentrierstationen, die mechanische Schieber und Anschläge aufweisen, an welchen die Platine ausgerichtet werden kann. Diese haben allerdings den Nachteil, dass sie bei einem Wechsel des Platinentyps aufwendig manuell umgerüstet werden müssen, indem die Schieber und Anschläge neu positioniert und orientiert werden. Bei der Bearbeitung von unregelmässig geformten oder einer Mehrzahl von kleinen Blechen ist zudem eine grosse Zahl von Schiebern und Anschlägen notwendig, um die korrekte Positionierung sicherzustellen.

Besonders für Fälle, in welchen sich der in einer Presse zu bearbeitende Platinentyp oft ändert, sind automatische Lösungen entwickelt worden, um den genannten Nachteilen zu begegnen.

Die EP 865 331 B1 (Reinhardt Maschinenbau GmbH) beschreibt beispielsweise ein Biegezentrum und ein Verfahren, um ein Blechteil einer Biegezelle des Biegezentrums vorzulegen. Nach einer Lagebestimmung des Blechteils mit einem Sensor wird es mittels eines Manipulators beim Einführen in die Biegezelle in einer Richtung exakt positioniert. Es ist vorgesehen, dass der Sensor in zwei verschiedenen Richtungen bewegt wird, um mit möglichst wenigen Sensoren die Lage des Blechteils in beiden Richtungen sowie seine Verdrehung bestimmen zu können. Es ist weiter als vorteilhaft beschrieben, den Sensor an der Manipulatoranordnung zu befestigen, um deren Mobilität auszunutzen. Neben einem in eine erste Richtung beweglichen Manipulator wird ein zweiter Manipulator beschrieben, der gleichzeitig mit dem ersten Manipulator arbeiten kann und in einer zweiten Richtung beweglich ist. Der Sensor zur Lagebestimmung des Blechteils ist unter anderem als in einer Gabel angeordnete Lichtschranke zur Erkennung der Kanten des Blechteils ausgeführt.

Diese Anordnung hat allerdings aufgrund der hintereinander angeordneten Manipulatoren eine grosse Baulänge. Sie ist zudem auf die gleichzeitige Positionierung jeweils eines Blechteils beschränkt.

Die US 5,293,984 (Bobst S. A.) beschreibt eine Vorrichtung zur Abfertigung und Ausrichtung von flachen, gebündelten Werkstücken. Es wird eine Transportvorrichtung beschrieben, die aus Sets von mehreren angetriebenen Rollen besteht. Zwischen den Rollen kann ein Tisch mit sich bewegenden Kugeln auf- und abwärts sowie zu den Seiten bewegt werden.

Diese Vorrichtung weist einen sehr komplexen Aufbau auf und ist wiederum auf die gleichzeitige Positionierung einzelner Werkstücke beschränkt.

Die Firma W. Strothmann GmbH, Schloss Holte-Stukenbrock (Deutschland) bietet einen Eintragefeeder mit integriertem Bilderkennungs- und -verarbeitungssystem an, der während der Überführung in die Presse die Position der Platine den Vorgaben anpasst. Das System basiert auf WhipLash-Beladefeedern, die über die herkömmlichen Verfahrachsen hinaus auch Drehbewegungen in der u-Achse ausführen können, was eine präzise Kontrolle über die Winkelausrichtung der Bleche ermöglicht. Das eigentliche optische Zentriersystem besteht aus einer Kamera und der Bilderkennungs- und -verarbeitungsplattform, die an die CNC-Steuerung des Feeders angebunden ist. Während die Platine auf dem Förderband vor die Presse transportiert wird, erkennt das optische System ihre jeweilige Lage, so dass der Beladefeeder das Teil entsprechend aufnehmen kann. Um eine neue Zielposition vorzugeben, muss ein Werkstück nur einmal korrekt in der Presse platziert, dann vom Feeder entnommen und ohne Lageänderung zur Erfassung unter der Kamera abgelegt werden.

Diese Lösung bedingt allerdings, dass ein spezifischer, komplex aufgebauter Eintragefeeder eingesetzt wird, der zudem auf die Presse abgestimmt sein muss. Beispielsweise muss die Fahrgeometrie des Eintragefeeders derartig sein, dass die zu verarbeitenden Werkstücke durch ein entsprechendes Fenster der Presse hindurch zur Zielposition in der Presse transportiert werden können. Ein einzelner Eintragefeeder kann zudem während des Eintragens nur gerade eine Positions- und/oder Winkelkorrektur vornehmen; ist es erwünscht, die Position und/oder Orientierung mehrerer Werkstücke unabhängig voneinander zu ändern, sind mehrere Eintragefeeder notwendig.

### Darstellung der Erfindung

Aufgabe der Erfindung ist es, eine dem eingangs genannten technischen Gebiet zugehörende Zentriervorrichtung zu schaffen, welche einen einfachen Aufbau aufweist und mehrere Werkstücke gleichzeitig neu orientieren kann.

Die Lösung der Aufgabe ist durch die Merkmale des Anspruchs 1 definiert. Gemäss der Erfindung umfasst die Zentriervorrichtung
a) einen ersten, um eine erste vertikale Achse drehbaren Tisch zur Werkstückaufnahme;
b) einen zweiten, um eine zweite vertikale Achse drehbaren Tisch zur Werkstückaufnahme, wobei der zweite Tisch seitlich neben dem ersten Tisch angeordnet ist und eine Trageebene des ersten Tischs mit einer Trageebene des zweiten Tischs im Wesentlichen übereinstimmt; und
c) einen Drehmechanismus, welcher derart mit dem ersten Tisch und mit dem zweiten Tisch mechanisch gekoppelt ist, dass sich der erste und der zweite Tisch gemeinsam um eine dritte vertikale Achse drehen lassen.

Werden beide Tische gemeinsam um die dritte vertikale Achse gedreht, so bilden die Tische eine gemeinsame Tragefläche. Die Tische stehen in dieser Betriebsart während der Drehung relativ zueinander still, die Tragefläche wird also als Ganzes gedreht. In der anderen Betriebsart werden die Tische einzeln um beabstandete vertikale Drehachsen gedreht; die Tische und deren Trageflächen bewegen sich somit relativ zueinander.

Mit der erfindungsgemässen Vorrichtung lassen sich somit ohne Umbauarbeiten sowohl ein einzelnes Werkstück, welches die gesamte Breite der Zentriervorrichtung beanspruchen kann, als auch gleichzeitig zwei Werkstücke geringerer Breite für die nachfolgende Bearbeitung korrekt orientieren. Die Drehachsen ermöglichen es, die Winkelstellung der Werkstücke so zu korrigieren, dass sie z. B. durch einen einfach aufgebauten Eintragefeeder übernommen und in die erste nachfolgende Bearbeitungsstation überführt werden können. Die Erfindung ist nicht auf Vorrichtungen mit genau zwei Tischen beschränkt, sondern lässt sich auf Ausführungsformen mit drei oder mehr Tischen verallgemeinern.

Mit Vorteil umfasst die erfindungsgemässe Zentriervorrichtung eine Steuerung, welche zwischen einer ersten Betriebsart und einer zweiten Betriebsart umschaltbar ist. In der ersten Betriebsart erfolgt eine Orientierung grosser, von beiden Tischen aufgenommener Werkstücke durch Drehen beider Tische um die dritte Achse; in der zweiten Betriebsart werden zwei kleinere, von jeweils einem der Tische aufgenommene Werkstücke gleichzeitig orientiert, indem voneinander unabhängige Winkelpositionierungen beider Werkstücke durch Drehen der Tische um die erste bzw. zweite Achse vorgenommen werden. Durch ein einfaches Umschalten kann somit zwischen den beiden Betriebsarten gewechselt werden. Manuelle Umbauarbeiten erübrigen sich.

Bevorzugt ist der Drehmechanismus durch einen um die dritte vertikale Achse drehbar an einem Maschinengestell gelagerten Träger gebildet, auf welchem sowohl der erste Tisch als auch der zweite Tisch gelagert sind. Dies ermöglicht eine einfache Konstruktion und eine einfache Steuerung der Vorrichtung; in der ersten Betriebsart (Drehen beider Tische) wird der Träger mitsamt beiden Tischen um die dritte vertikale Achse gedreht, während die Tische bezüglich des Trägers nicht bewegt werden; in der zweiten Betriebsart (individuelle Drehbewegungen) steht der Träger still, während die Tische relativ zum Träger gedreht werden.

Alternativ sind die Tische derart bezüglich mehrerer Achsen beweglich gelagert, dass sie beide durch eine Superposition von Bewegungen bezüglich dieser Achsen eine zueinander synchrone Bewegung um die dritte vertikale Achse ausführen können, auch wenn an Ort der dritten Achse keine physische Drehachse existiert. Eine derartige Kinematik lässt sich beispielsweise durch zwei zueinander senkrecht stehende horizontale Linearachsen sowie eine vertikale Drehachse realisieren, wobei die Drehachse nicht mit der dritten vertikalen Achse zusammenfallen muss.

Mit Vorteil umfassen der erste Tisch und der zweite Tisch eine Vorrichtung zum linearen Bewegen der Werkstücke in einer Richtung quer zu einer Zuführungsrichtung. Dies ermöglicht individuelle Positionskorrekturen der Werkstücke in Querrichtung.

Dazu sind der erste Tisch und der zweite Tisch mit Vorteil am Drehmechanismus quer verschiebbar gelagert. Die Tische können somit unabhängig voneinander relativ zum Drehmechanismus in Querrichtung bewegt werden.

Ist ein einzelnes Werkstück, welche die Trageflächen beider Tische beansprucht, in Querrichtung zu positionieren, können die erwähnten Vorrichtungen zum linearen Bewegen der Werkstücke in Querrichtung synchron miteinander bewegt werden, oder es ist eine zusätzliche Vorrichtung vorhanden, mittels welcher beide Tische gleichzeitig bewegt werden, z. B. eine Vorrichtung, die auf den Drehmechanismus, insbesondere auf den oben erwähnten Träger, wirkt, auf welchem beide Tische gelagert sind.

Je nach den Anforderungen der nachfolgenden Bearbeitungseinheit bzw. eines Eintragefeeders sind auch Zentriervorrichtungen denkbar, die keine Korrekturen der Querposition vornehmen und somit keine Vorrichtung zum linearen Bewegen der Werkstücke in Querrichtung benötigen.

Vorzugsweise umfassen der erste Tisch und der zweite Tisch eine Vorrichtung zum linearen Bewegen der Werkstücke in einer Zuführungsrichtung (Längsrichtung). Dadurch lassen sich die Werkstücke auch in Zuführungsrichtung korrekt positionieren. Der Eintragefeeder oder ein anderes übernehmendes Element kann somit das Werkstück immer an der korrekten Längsposition übernehmen, was eine sehr einfache Konstruktion und Steuerung des Feeders bzw. des Elements erlaubt. Besonders vorteilhaft ist es, wenn die erfindungsgemässe Vorrichtung sowohl eine Vorrichtung zum linearen Bewegen der Werkstücke in Querrichtung als auch eine Vorrichtung zum linearen Bewegen der Werkstücke in Längsrichtung umfasst. In diesem Fall lässt sich ein Werkstück nämlich in einer genau definierten Position und Orientierung auf der Trageebene bereitstellen, und der Eintragefeeder oder das übernehmende Element können alle Werkstücke an dieser genau definierten Position übernehmen und - im einfachsten Fall unter Beibehaltung der Orientierung -- in die nachfolgende Bearbeitungsstation transportieren.

Bevorzugt ist die Vorrichtung zum linearen Bewegen der Werkstücke in der Zuführungsrichtung durch Magnetbänder gebildet. Damit lassen sich metallische Werkstücke, z. B. zu verformende Bleche, zuverlässig und mit hoher Dynamik transportieren. Die Bänder ermöglichen zudem eine einfache Aufnahme der Werkstücke von einer vorgeordneten Transporteinrichtung und Transportbewegungen, die über die eigentlichen Trageflächen der Tische hinausgehen. Alternativ sind andersartige aufgebaute Vorrichtungen einsetzbar, z. B. übliche Förderbänder oder Förderplatten, auf welchen die Werkstücke durch Reibung oder auch Formschluss gehalten sind.

Mit Vorteil weisen die beiden Tische an einander gegenüberliegenden Abschnitten jeweils einseitig angeordnete, beabstandete Tragelemente auf, welche derart angeordnet sind, dass sie sich in einem Bereich zwischen den beiden Tischen verzahnen und dadurch eine Tragefläche zwischen den Tischen bilden. Diese Tragefläche, deren Trageebene mit den Trageebenen der beiden Tische übereinstimmt, verhindert ein Durchbiegen oder Durchhängen von grossen Werkstücken, die von beiden Tischen getragen werden und ermöglicht gleichzeitig unbehinderte Relativbewegungen (Derhungen und/oder Linearbewegungen) zwischen den beiden Tischen. Die Tragelemente sind beispielsweise länglich ausgebildet und erstrecken sich abwechselnd ausgehend vom ersten und vom zweiten Tisch in Querrichtung. Ihre Länge und Breite sind so gewählt, dass sie auch bei maximal einander angenäherten Tischen und maximalem relativen Drehwinkel nicht miteinander oder mit dem gegenüberliegenden Tisch kollidieren. Besonders vorteilhaft ist es, wenn die Tragelemente frei drehbare Rollen oder Kugeln oder eine antihaftend beschichtete Oberfläche besitzen, damit sie Bewegungen der Werkstücke auf der Tragefläche einen möglichst geringen Widerstand entgegensetzen.

Alternativ kann eine zwischen den Tischen liegende Tragefläche durch andersartige Elemente ausgebildet sein, z. B. durch Elemente, die fest mit einer Basis der Vorrichtung oder einem unter den Tischen angeordneten Element derselben verbunden sind. Werden in einer Anlage ausschliesslich Werkstücke einer gewissen minimalen Steifigkeit verarbeitet, kann sich eine Tragefläche zwischen den Tischen ganz erübrigen.

Vorzugsweise umfasst die erfindungsgemässe Zentriervorrichtung eine Erfassungseinrichtung zum Erfassen einer Position und einer Orientierung eines angeförderten Werkstücks. Basierend auf diesen erfassten Informationen kann dann die Korrektur der Position und der Orientierung des Werkstücks durch die Zentriervorrichtung erfolgen.

Die Erfassungseinrichtung ist mit Vorteil durch einen Linienscanner gebildet, welcher vor dem ersten und dem zweiten Tisch im Zuführweg der Werkstücke angeordnet ist und sich in Querrichtung über eine Zuführbahn für die Werkstücke erstreckt. Die Position und Orientierung der Werkstücke wird somit während deren Zuführung durch den Linienscanner erfasst. Der Linienscanner kann einfach ausgebildet werden, ermöglicht eine präzise Erfassung von Position und Orientierung und erfordert im Gegensatz zu anderen Erfassungseinrichtungen, wie z. B. Videokameras, keine aufwendige Bildverarbeitung.

Die Zentriervorrichtung umfasst dabei mit Vorteil eine Steuereinrichtung, welche derart ausgebildet und programmiert ist, dass sie aus einem vom Linienscanner erfassten Hell-Dunkel-Profil des Werkstücks die mittels der drehbaren Tische vorzunehmenden Positions- und Winkelkorrektur ermitteln kann. Durch die Aufnahme eines Hell-/Dunkelprofils, welches Aussen- und gegebenenfalls Innenkonturen des Werkstücks wiedergibt, werden einfach verarbeitbare Daten gewonnen, welche eine präzise Positionierung und Orientierung des Werkstücks erlauben. Das erfasste Profil kann insbesondere mit einem Sollprofil verglichen werden, welches die von der nachfolgenden Bearbeitungsstation bzw. vom nachfolgenden Eintragefeeder erwartete Position und Orientierung repräsentiert. Abweichungen zwischen dem Hell-/Dunkelprofil und dem Sollprofil werden durch die Steuerung in an sich bekannter Weise ausgewertet und in vorzunehmende Korrekturen, z. B. Korrekturen im Drehwinkel, in Längs- und in Querrichtung, umgerechnet. Die Korrekturen werden dann durch die drehbaren Tische und die Vorrichtungen zur Quer- und Längsbewegung umgesetzt, so dass das fertig positionierte und orientierte Werkstück dem Sollprofil entspricht.

Das Sollprofil eines Werkstücks wird im Rahmen des Einrichtens der Zentriervorrichtung bevorzugt wie folgt erzeugt:
a) Zunächst wird Werkstück des zu zentrierenden Typs in eine Zielposition in einer Bearbeitungsstation eingelegt, wobei die Bearbeitungsstation der Zentriervorrichtung nachgeordnet ist.
b) Anschliessend wird das Werkstück entgegen der Zuführrichtung über den Zentriertisch und durch die Erfassungseinrichtung transportiert, indem der Bearbeitungsstation, der Zentriervorrichtung und/oder der Erfassungseinrichtung zugeordnete Transporteinrichtungen rückwärts betrieben werden.
c) Dann werden die Position und die Orientierung des Werkstücks durch die Erfassungseinrichtung erfasst, worauf ein Sollprofil, welches der erfassten Position und Orientierung des Werkstücks entspricht, erzeugt werden kann.

Die erwähnten Transportvorrichtungen können je nach Konfiguration auch den Eintragefeeder umfassen; entscheidend ist, dass alle beteiligten Vorrichtungen, die die Position und/oder Orientierung des Werkstücks während des Transports zwischen Erfassungseinrichtung und Bearbeitungsstation in einer vorgegebenen Weise beeinflussen, in Rückwärtsrichtung betrieben werden. Mit Vorteil ist der Zentriertisch während des Einrichtens passiv, führt also keine Rotationen oder Linearbewegungen aus. Prinzipiell kann der Zentriertisch aber vorgegebene Bewegungen ausführen; diese müssen anschliessend lediglich bei der Berechnung des Sollprofils, beim Abgleich zwischen Sollprofil und dem erfassten Profil und/oder bei der Berechnung der vorzunehmenden Korrekturen berücksichtigt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine erste Schrägansicht einer erfindungsgemässen Zentriervorrichtung;
- Fig. 2: eine zweite Schrägansicht der Zentriervorrichtung;
- Fig. 3: eine Aufsicht der Zentriervorrichtung in einer Richtung quer zur Zuführungsrichtung;
- Fig. 4: eine Aufsicht der Zentriervorrichtung in Zuführungsrichtung;
- Fig. 5: eine erste Draufsicht auf die Trageebene der Zentriervorrichtung;
- Fig. 6: eine zweite Draufsicht auf die Trageebene der Zentriervorrichtung;
- Fig. 7A, B: eine Aufsicht und eine Draufsicht auf die Zentriervorrichtung sowie vorund nachgeordnete Stationen; und
- Fig. 8A-D: eine schematische Darstellung eines erfindungsgemässen Verfahrens zum Zentrieren von Werkstücken.

Grundsätzlich sind in den Figuren gleiche Teile mit gleichen Bezugszeichen versehen.

### Wege zur Ausführung der Erfindung

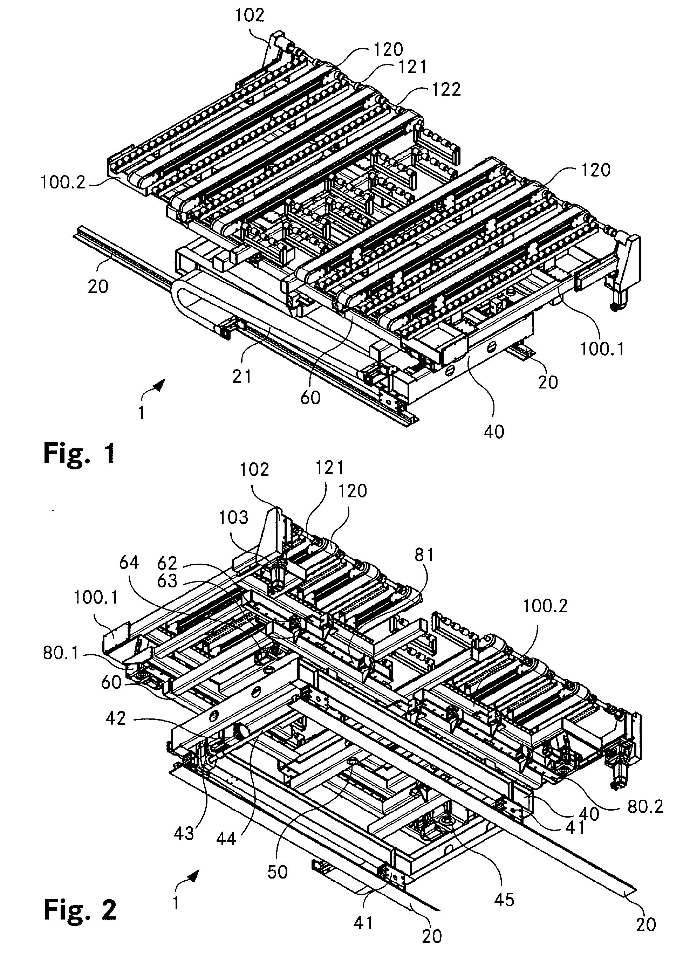

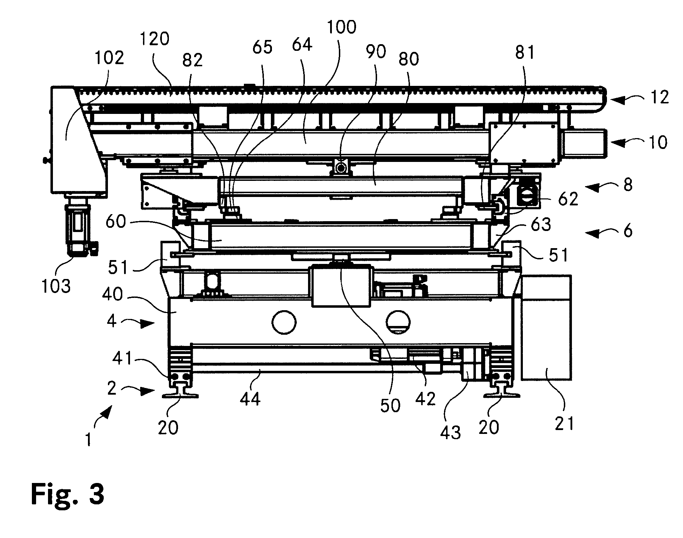

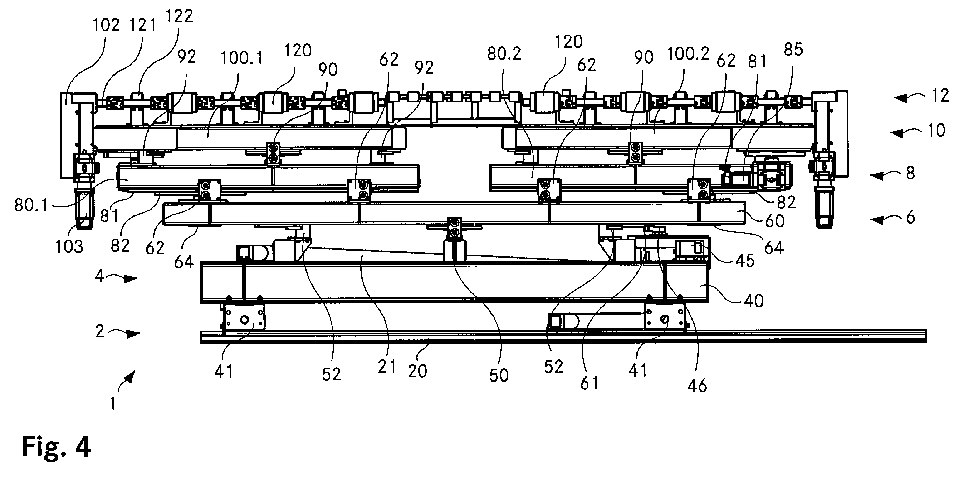

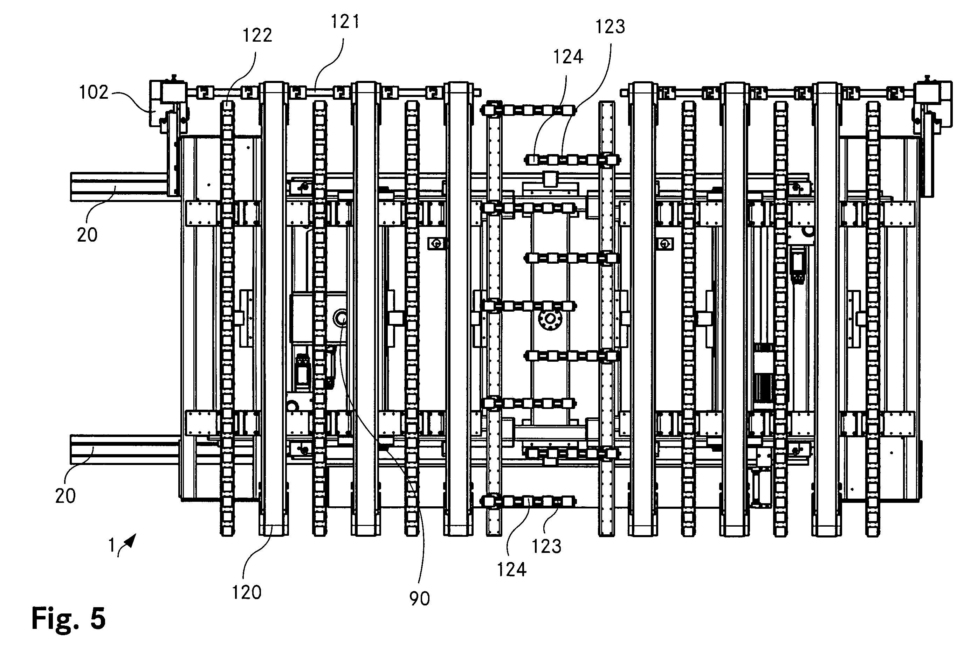

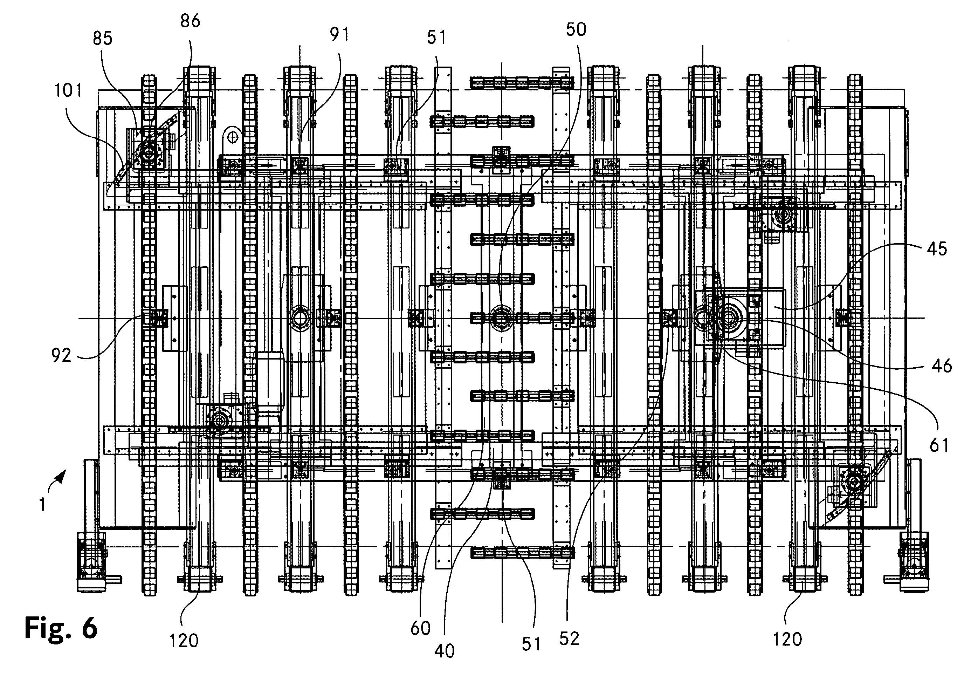

Die Figuren 1 - 6 zeigen verschiedene Ansichten einer erfindungsgemässen Zentriervorrichtung. Die Figur 1 stellt eine erste Schrägansicht der Zentriervorrichtung, von oben gesehen, dar; die Figur 2 zeigt die Schrägansicht von unten. Die Figuren 3 und 4 zeigen Aufsichten in einer Richtung quer zur Zuführungsrichtung (im Folgenden auch Querrichtung) bzw. in Zuführungsrichtung (im Folgenden auch Längsrichtung). Die Figur 5 zeigt eine Draufsicht auf die Trageebene der Zentriervorrichtung, während die Figur 6 grundsätzlich dieselbe Ansicht zeigt, wobei aber die Elemente der Vorrichtung transparent dargestellt sind, so dass alle Ebenen der Vorrichtung gleichzeitig sichtbar sind.

Die Zentriervorrichtung 1 umfasst von unten nach oben mehrere übereinander liegende Ebenen (siehe z. B. Figuren 3, 4). Die unterste Ebene 2 wird durch zwei am Boden befestigte, in Querrichtung verlaufende, parallele Schienen 20 gebildet. Die nächst höhere Ebene 4 umfasst einen horizontal orientierten rechteckigen Rahmen 40, welcher entlang der Schienen 20, also in Querrichtung, linear verschiebbar ist. Die Möglichkeit derartiger Verschiebungen ist insbesondere bei der Vornahme von Wartungsarbeiten von Vorteil. Auf dem Rahmen 40 ist ein ebenfalls rechteckiger Träger 60 um eine vertikale Achse 50, welche durch die geometrischen Mittelpunkte des Rahmens 40 und des Trägers 60 verläuft, drehbar gelagert. Der Träger 60 bildet die nächst höhere Ebene 6. Auf diesem Träger 60 sind zwei gleich aufgebaute, rechteckige Wagen 80.1, 80.2 gelagert, wobei die Wagen 80.1, 80.2 in Querrichtung relativ zum Träger 60 unabhängig voneinander linear verschiebbar sind. Auf jedem der Wagen 80.1, 80.2, welche gemeinsam eine weitere Ebene 8 bilden, ist ein Tisch 100.1, 100.2 um jeweils eine vertikale Achse 90 drehbar gelagert. Die Drehachsen 90 verlaufen durch die geometrischen Mittelpunkte der Wagen 80.1, 80.2 und des jeweiligen Tischs 100.1, 100.2. Die Tische 100.1, 100.2 befinden sich in einer gemeinsamen Ebene 10. Auf beiden Tischen 100.1, 100.2 sind schliesslich mehrere, sich in Längsrichtung (d. h. in Zuführungsrichtung) erstreckende, bewegliche Magnetbänder 120 angeordnet, welche die oberste Ebene 12, Trageebene der Zentriervorrichtung 1, bilden.

Damit sich der aus Stahlprofilen mit I-förmigem Querschnitt aufgebaute Rahmen 40 entlang der Schienen 20 verfahren lässt, ist an seinen in Querrichtung verlaufenden Profilen im Bereich seiner Ecken jeweils eine Rollenführung 41 angebracht, deren Rollen auf der entsprechenden Schiene 20 abrollen können. Die Rollenführungen 41 und die Schienen 20 bilden somit eine Linearführung für den Rahmen 40. An der Unterseite des Rahmens 40 ist zudem ein elektrischer Antriebsmotor 42 befestigt, der über ein Getriebe 43 und eine Welle 44 an zwei der Rollenführungen 41 gekoppelt ist (siehe Figur 2). Der Antriebsmotor 42 wird über eine seitlich neben dem quer verlaufenden Profil des Rahmens 40 angeordnete Schleppkette 21 mit Steuersignalen und mit Strom versorgt. Mit Hilfe des Antriebsmotors 42 können somit - mit Ausnahme der am Boden befestigten Schienen 20 - alle darüber liegenden Ebenen 4, 6, 8, 10, 12 (also insbesondere auch die Trageebene der Zentriervorrichtung 1) gemeinsam, d. h. gleichzeitig und um denselben Betrag, in Querrichtung bewegt werden.

Der Träger 60 ist mit dem Rahmen 40 zum einen über die sowohl durch den geometrischen Mittelpunkt des Trägers 60 als auch des Rahmens 40 verlaufende vertikal orientierte Achse 50 verbunden, wobei die Achse 50 eine Relativdrehung zwischen Träger 60 und Rahmen 40 erlaubt. Nickbewegungen des Trägers 60 gegenüber dem Rahmen 40 werden durch je zwei einander gegenüberliegende Rollenführungen 51, 52 verhindert, die jeweils beidseitig in Quer- als auch in Längsrichtung von der Achse 50 beabstandet angeordnet sind. Sie umfassen jeweils am Rahmen 40 befestigte Rollenpaare, wobei die Drehachsen der Rollen horizontal sind und zur Achse 50 weisen, sowie eine zwischen den Rollen geführte, am Träger 60 befestigte Schiene. Gegenüberliegende Rollen der Rollenführungen 51, 52 werden derart gegenseitig zugestellt, dass die Schienen in vertikaler Richtung im Wesentlichen spielfrei geführt sind. Die Rollenführungen 51, 52 sind zudem so dimensioniert, dass in einer horizontalen Ebene, zwischen den Schienen und den Begrenzungen des Rollenträgers ein gewisses Spiel herrscht, welches ein ungehindertes Drehen des Trägers 60 um die Achse 50 in der benötigten Grössenordnung (bei gängigen Anwendungen zum Positionieren von Werkstücken maximal ca. 5°) zulässt.

Um die Drehbewegung zwischen Rahmen 40 und Träger 60 zu bewirken, ist auf der Oberseite des Rahmens 40 ein elektrischer Antriebsmotor 45 befestigt, der ebenfalls über die erwähnte Schleppkette 21 gesteuert und mit Strom versorgt wird. Der Antriebsmotor 45 wirkt auf ein Ritzel 46, das mit einem aussenverzahnten, am Träger 60 fest angeordneten Zahnsegment 61 zusammenwirkt (siehe Figur 6). Sowohl das Ritzel 46 als auch das Zahnsegment 61 sind am Rahmen 40 bzw. am Träger 60 in Querrichtung zur Achse 50 beabstandet angeordnet. Durch die Anordnung der Führungen 51, 52 sowie des Ritzels 46 und des Zahnsegments 61 ergibt sich eine gute Abstützung des Trägers 60 an den Führungen, und aufgrund des vorhandenen Hebelarms sind die zum Drehen des Trägers 60 notwendigen, vom Ritzel 46 auf das Zahnsegment 61 zu übertragenden Kräfte gering. Die Führungen 51, 52 sind zudem so positioniert, dass ein im Vergleich zu anderen Positionen geringstmögliches Spiel in Längs- bzw. Querrichtung ausreicht, um die Drehbewegung des Trägers 60 zu ermöglichen.

Auf den in Zuführungsrichtung aussen liegenden Seiten des Trägers 60 sind beidseitig je vier Rollenführungen 62 angeordnet. Wie in den Figuren 2 und 3 gut sichtbar ist, sind diese auf seitlich am Träger 60 befestigten Auslegern 63 befestigt und ragen über den Träger 60 hinaus nach oben. Jede Rollenführung 62 umfasst zwei übereinander liegende, um horizontale, in Zuführungsrichtung verlaufende Drehachsen drehbare Rollen. Zwischen diesen Rollen sind Schienen 81 geführt, die auf der Unterseite der Wagen 80.1, 80.2 befestigt sind. Jeweils vier Rollenführungen 62 wirken mit einem Wagen 80.1, 80.2 zusammen und ermöglichen so eine Querbewegung des Wagens 80.1, 80.2 relativ zum Träger 60. Diese Linearbewegungen werden durch zwei elektrische Antriebsmotoren 64 bewirkt, wobei jeweils einer der Motoren im Bereich eines jeweiligen Wagens 80.1, 80.2 am Träger 60 angeordnet ist. Die Antriebsmotoren 64 treiben ein Ritzel 65 an, welches mit einer am jeweiligen Wagen 80.1, 80.2 befestigten Zahnstange 82 zusammenwirkt (siehe Figuren 2, 3).

Die beiden Wagen 80.1, 80.2 sind im Wesentlichen gleich aufgebaut und besitzen die gleiche Funktionalität. Die folgenden Angaben zu den Wagen 80.1, 80.2 und daran gelagerten Elementen treffen somit jeweils gleichermassen auf beide Wagen 80.1, 80.2 zu, wenn nichts anderes gesagt ist.

Der Tisch 100 ist mit dem Wagen 80 zum einen über die sowohl durch den geometrischen Mittelpunkt des Tischs 100 als auch des Wagens 80 verlaufende vertikal orientierte Achse 90 verbunden, wobei die Achse 90 eine Relativdrehung zwischen Tisch 100 und Wagen 80 erlaubt. Nickbewegungen des Tischs 100 gegenüber dem Wagen 80 werden durch je zwei gegenüberliegende Rollenführungen 91, 92 verhindert, die jeweils beidseitig in Quer- als auch in Längsrichtung von der Achse 90 beabstandet angeordnet sind. Sie umfassen jeweils am Wagen 80 befestigte Rollenpaare, wobei die Drehachsen der Rollen horizontal sind und zur Achse 90 weisen, sowie eine zwischen den Rollen geführte, am Tisch 100 befestigte Schiene. Gegenüberliegende Rollen der Rollenführungen 91, 92 werden derart gegenseitig zugestellt, dass die Schienen in vertikaler Richtung im Wesentlichen spielfrei geführt sind. Die Führungen 91, 92 sind zudem so dimensioniert, dass in einer horizontalen Ebene, zwischen den Schienen und den Begrenzungen des Rollenträgers ein gewisses Spiel herrscht, welches ein ungehindertes Drehen des Tischs 100 um die Achse 90 in der benötigten Grössenordnung (bei gängigen Anwendungen maximal ca. 5°) zulässt.

Um die Drehbewegung zu bewirken, ist im Bereich einer in Querrichtung äusseren Ecke des Wagens 80 ein elektrischer Antriebsmotor 85 befestigt, der auf ein Ritzel 86 wirkt, das seinerseits mit einem innenverzahnten, im entsprechenden Eckbereich des Tischs 100 fest angeordneten Zahnsegment 101 zusammenwirkt (siehe Figur 6). Durch die Anordnung der Führungen 91, 92 sowie des Ritzels 86 und des Zahnsegments 101 ergibt sich eine gute Abstützung des Tischs 100 an den Führungen 91, 92, und aufgrund des Hebelarms sind die zum Drehen des Tischs 100 notwendigen, zwischen dem Ritzel 86 und dem Zahnsegment 101 zu übertragenden Kräfte gering.

Die Führungen 91, 92 sind zudem so positioniert, dass ein im Vergleich zu anderen Positionen geringstmögliches Spiel in Längs- bzw. Querrichtung ausreicht, um die Drehbewegung des Tischs 100 zu ermöglichen.

Auf der Oberseite des Tischs 100 sind drei in Längsrichtung umlaufende, an sich bekannte, Magnetbänder 120 angeordnet. Diese werden gemeinsam durch eine Welle 121 angetrieben, um welche die Magnetbänder an deren einem Ende umlaufen. Die Welle 121 wird über ein Getriebe 102 von einem elektrischen Antriebsmotor 103 getrieben, welcher am Tisch 100 angeordnet ist. Mit Hilfe der Magnetbänder 120 kann ein in der Trageebene aus der Zuführungsrichtung zugeführtes Werkstück vom Tisch 100 aufgenommen und in Längsrichtung positioniert werden. Zwischen zwei benachbarten Magnetbändern 120 sowie auf der Aussenseite des in Querrichtung äussersten Magnetbandes 120 sind jeweils zu den Magnetbändern 120 parallele Reihen von frei drehbaren Rollen 122 angeordnet, wobei die Rollen 122 derart angeordnet sind, dass sie zusammen mit den Magnetbändern 120 eine durchgehende Tragefläche bilden. Die Rollen 122 verhindern ein Durchhängen von grossflächigen Werkstücken geringer Steifigkeit; aufgrund ihres geringen Rollwiderstands ermöglichen sie aber einen ungehinderten Längstransport des Werkstücks auf dem Tisch 100.

Wie am besten aus der Figur 5 ersichtlich ist, sind im Bereich der einander zugewandten Längsseiten der Tische 100.1, 100.2 an beiden Tischen 100.1, 100.2 jeweils mehrere, sich über die Abmessungen der eigentlichen Tische 100.1, 100.2 in Querrichtung nach innen erstreckende, horizontale Wellen 123 befestigt. Die Wellen 123 tragen jeweils mehrere frei drehbare Rollen 124 und sie sind derart an den Tischen 100.1, 100.2 angeordnet, dass sich in Längsrichtung Wellen 123 des einen Tisches 100.1 mit Wellen 123 des anderen Tisches 100.2 abwechseln, d. h. es wird eine Art Verzahnung zwischen den Wellen 123 gebildet. Die auf den Wellen 123 gehaltenen Rollen 124 bilden eine zwischen den Tischen 100.1, 100.2 liegende Tragefläche, die in derselben Ebene liegt wie die Trageflächen der beiden Tische 100.1, 100.2. Sie können somit ein Durchhängen von Werkstücken zwischen den beiden Tischen 100.1, 100.2 verhindern. Aufgrund der verzahnten Anordnung werden relative Drehbewegungen zwischen den Tischen 100.1, 100.2 im notwendigen Rahmen (also typischerweise bis max. 5°) aber nicht behindert. Die Länge der Wellen 123 ist zudem so gewählt, dass sie einerseits bei maximaler Annäherung der beiden Tische nicht mit dem gegenüberliegenden Tisch 100 kollidieren und dass sie andererseits bei maximaler Entfernung der beiden Tische 100.1, 100.2 stets noch ineinander verzahnt sind, d. h. dass in Querrichtung zwischen den beiden Tischen 100.1, 100.2 kein Unterbruch in der Tragefläche entsteht.

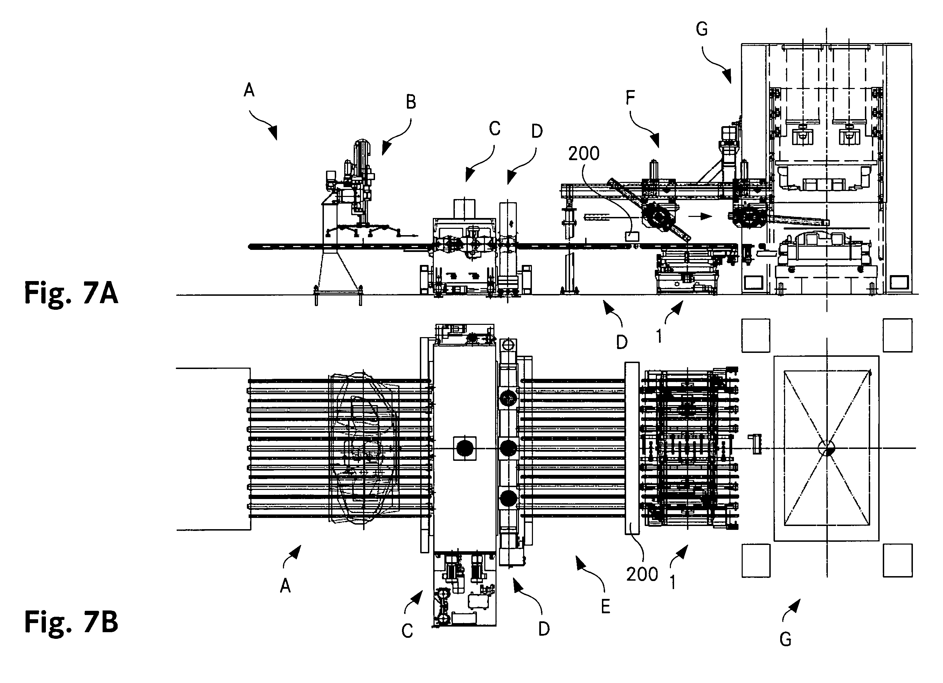

Die Figuren 7A, B zeigen eine Aufsicht bzw. eine Draufsicht auf die Zentriervorrichtung 1 sowie auf vor- und nachgeordnete Stationen. Diese Stationen sind an sich bekannt, auf Details wird deshalb im Folgenden nicht eingegangen. Die Stationen umfassen in Zuführungsrichtung zunächst einen Bereitstellungstisch A, auf welchen die zu bearbeitenden Werkstücke (Platinen) mittels eines ersten Feeders B abgelegt werden können. Der Bereitstellungstisch ist mit Fördermitteln für die Bewegung des Werkstücks in Zuführungsrichtung versehen, insbesondere mit einer Reihe von in Längsrichtung laufenden Magnetbändern. Mit Hilfe dieser Fördermittel wird das Werkstück zunächst durch eine Waschanlage C, eine Beölungseinrichtung D und danach auf einen weiteren Fördertisch E, der wiederum mit Fördermitteln für den Längstransport versehen ist, transportiert. Am Ausgang des Fördertischs E ist ein Linienscanner 200 angeordnet, welcher sich quer über die gesamte Transportbahn der Werkstücke erstreckt. Für derartige Linienscanner geeignete Einheiten mit Lichtquelle und Kamera sind beispielsweise von der Firma Tichawa Vision GmbH, Friedberg (Deutschland) verfügbar. In der Waschanlage C wird das Werkstück gereinigt, anschliessend in der Beölungseinrichtung D beölt; der Linienscanner 200 erfasst mittels einer Auflichteinheit zeilenweise ein Hell-/Dunkelprofil des Werkstücks. Vom Fördertisch E wird das Werkstück direkt auf den Zentriertisch 1 bewegt, wo es von den oben beschriebenen Magnetbändern übernommen und soweit in Längsrichtung bewegt wird, bis es vollständig auf den Tischen der Zentriervorrichtung 1 aufgenommen ist.

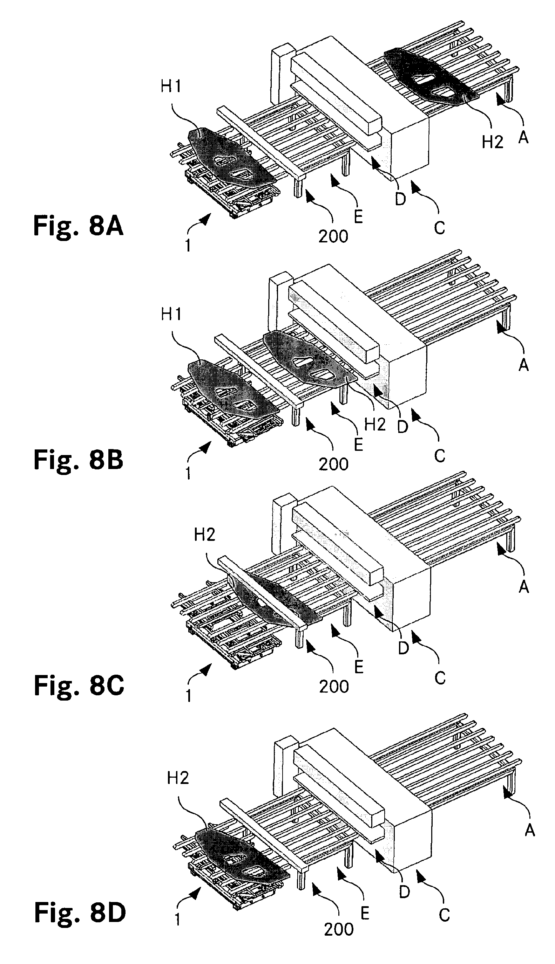

Nach dem Zentriervorgang, welcher weiter unten, im Zusammenhang mit der Figur 8, näher beschrieben ist, wird das Werkstück von einem Einlegeroboter F, welcher mit einer Greifeinheit ausgerüstet ist, von den Tischen der Zentriervorrichtung 1 entnommen und in die erste Pressestation G einer Mehrstationenpresse eingelegt. Anstelle eines einzelnen Werkstücks können mit dieser Anordnung parallel zwei kleinere Werkstücke bearbeitet werden. Dazu werden diese Werkstücke nebeneinander auf dem Bereitstellungstisch abgelegt, parallel durch die Waschanlage C, die Beölungseinrichtung D und den Linienscanner 200 auf die beiden Tische der Zentriervorrichtung 1 bewegt, dort individuell richtig positioniert und orientiert und schliesslich gemeinsam vom Einlegeroboter F in die erste Pressestation G eingelegt.

Die Figuren 8A - D sind eine schematische Darstellung eines erfindungsgemässen Verfahrens zum Zentrieren von Werkstücken. Dargestellt sind jeweils der Bereitstellungstisch A, die daran anschliessende Waschanlage C, die Beölungseinrichtung D, der wiederum anschliessende Fördertisch E mit dem Linienscanner 200 und die unmittelbar an den Fördertisch E anschliessende Zentriervorrichtung 1, von welcher das ausgerichtete und positionierte Werkstück von einer (nicht dargestellten) Einlegevorrichtung entnommen und unter Beibehaltung der korrekten Orientierung in eine erste Bearbeitungsstation transportiert werden kann.

In der in der Figur 8A dargestellten Situation befindet sich ein erstes Werkstück H1 (Platine), im vorliegenden Fall ein Karosserie-Seitenteil eines Personenwagens, auf dem sich noch in der Grundstellung befindenden Zentriertisch 1. Das nächste Werkstück H2, ein gleiches Karosserie-Seitenteil, wurde bereits auf den Bereitstellungstisch A aufgelegt. Als Nächstes folgt nun die Korrektur der Position und der Orientierung des Werkstücks H1. Dazu werden die Wagen 80.1, 80.2 der Zentriervorrichtung 1 synchron miteinander relativ zum Träger 60 in Querrichtung bewegt, um eine Korrektur in Querrichtung zu erreichen. Dazu sind die entsprechenden Achsen der Antriebsmotoren 64 steuerungsseitig gekoppelt. Die Korrektur in Längsrichtung erfolgt mittels der (für beide Tische 100 synchron bewegten) Magnetbänder 120; die Korrektur der Orientierung erfolgt durch eine Drehung des Trägers 60 bezüglich des Rahmens 40, um die Drehachse 50 (siehe Figuren 1 - 6). Weil im vorliegenden Fall nur ein einzelnes Werkstück zu positionieren ist, werden die restlichen Dreh- und Linearachsen der Zentriervorrichtung 1 festgehalten.

Gleichzeitig mit der Zentrierung des ersten Werkstücks H1 wird das zweite Werkstück H2 durch die Waschanlage C und die Beölungseinrichtung D auf den Fördertisch E und auf diesem mittels Magnetbändern weiter in Zuführungsrichtung transportiert. Es ergibt sich somit die in der Figur 8B dargestellte Situation.

Im weiteren Verlauf wird nun das erste Werkstück H1 von der Einlegevorrichtung von der Zentriervorrichtung 1 aufgenommen und der ersten Bearbeitungsstation zugeführt.

Sobald das Werkstück H1 abgehoben worden ist, fährt die Zentriervorrichtung 1 in ihre Grundstellung zurück, in welcher sich der Rahmen 40 in seiner Mittelposition befindet und in welcher die Längsrichtung des Rahmens parallel zur Zuführungsrichtung ausgerichtet ist. Anschliessend wird das zweite Werkstück H2 durch den Linienscanner 200 bewegt. Das Werkstück H2 passiert dabei eine Auflichteinheit, welche aus einer auf einer Seite der Transportbahn angeordneten länglichen Lichtquelle bzw. einer Reihe von Lichtquellen und einer auf derselben Seite der Transportbahn angeordneten entsprechenden länglichen Erfassungseinheit (Kamera) besteht. Weil das Werkstück H2 während des Durchlaufens des Linienscanners 200 das von der Lichtquelle abgestrahlte Licht nur teilweise reflektiert, kann somit durch die Erfassungseinheit linienweise ein Hell-/Dunkelprofil des Werkstücks aufgenommen werden. Nach Durchlaufen des Linienscanners 200 liegt in einer (nicht dargestellten) Steuerung ein vollständiges Abbild der Innen- und Aussenkonturen des Werkstücks H2 vor.

Dieses Abbild wird nun in der Steuerung mit einem vorgegebenen Sollprofil verglichen. Aus diesem Vergleich werden die vorzunehmenden Korrekturen ermittelt. Diese umfassen eine lineare Verschiebung in Querrichtung, eine lineare Verschiebung in Längsrichtung sowie eine Drehung um eine vertikale Achse.

Das Werkstück H2 wird nun mittels der Magnetbänder des Fördertischs E und der Zentriervorrichtung 1 weiter transportiert, bis es vollständig auf der sich noch immer in der Grundstellung befindlichen Zentriervorrichtung 1 aufgenommen ist. Abhängig von den ermittelten Korrekturen wird nun die Zentrierung des Werkstücks H2 vorgenommen. Diese verläuft auf dieselbe Weise wie weiter oben für das Werkstück H1 erläutert. Der Prozess wird fortgeführt, indem ein weiteres Werkstück auf den Bereitstellungstisch A aufgelegt wird, wodurch sich wieder die in der Figur 8A dargestellte Situation ergibt. Der vorliegende Prozess ermöglicht somit ein fortlaufendes vollautomatisches Zuführen, Reinigen, Erfassen und Positionieren von weiter zu verarbeitenden Werkstücken.

Für den Fall, dass kleinere Werkstücke bearbeitet werden, deren Ausdehnung in Querrichtung geringer ist als die Hälfte der Pressebreite, können mit der erfindungsgemässen Vorrichtung gleichzeitig je zwei Werkstücke verarbeitet werden. Dazu werden diese Werkstücke nebeneinander auf dem Bereitstellungstisch A abgelegt und parallel durch die Waschanlage C, die Beölungseinrichtung D und den Linienscanner 200 bewegt. Der Linienscanner erfasst zwei Hell-/Dunkelprofile und gleicht diese individuell mit zwei Sollprofilen ab. Es ergeben sich somit zwei Sätze von Korrekturwerten (Quer- und Längspositionierung, Winkelkorrektur). Die beiden Werkstücke gelangen anschliessend auf die beiden Tische der Zentriervorrichtung 1.

Um nun die Korrekturen vorzunehmen, wird die Zentriervorrichtung in einer anderen Betriebsart betrieben, in welcher die die Drehachse 50 zwischen dem Rahmen 40 und dem Träger 60 festgehalten wird und in welcher die steuerungsseitige Kopplung der Querbewegungen der Wagen 80.1, 80.2 entfällt. Stattdessen gelangen die Drehachsen 90 zwischen den Wagen 80.1, 80.2 und den Tischen 100.1, 100.2 zum Einsatz, und die Linearachsen zwischen dem Träger 60 und den Wagen 80.1, 80.2 werden unabhängig voneinander gefahren (siehe Figuren 1 - 6). Die Korrektur in Längsrichtung erfolgt wiederum durch die Magnetbänder 120, welche in diesem Fall aber ebenfalls für beide Tische 100.1, 100.2 unabhängig voneinander bewegt werden. Sobald beide Werkstücke individuell richtig positioniert und orientiert worden sind, können sie von der Einlegevorrichtung aufgenommen und in die erste Bearbeitungsstation transportiert werden.

Das Sollprofil, welches die Position und Orientierung des Werkstücks auf der Tragefläche der Zentriervorrichtung 1 vorgibt, kann wie folgt erzeugt werden: Zunächst wird das Werkstück korrekt orientiert in die erste Pressestation F eingelegt (siehe Figuren 7A, 7B). Der Einlegeroboter F durchläuft nun seinen (fest vorgegebenen) Arbeitszyklus rückwärts, entnimmt dabei das Werkstück aus der Pressestation G und legt es auf der Tragefläche der Zentriervorrichtung 1 ab. Der Einlegeroboter F ist dabei derart ausgebildet, dass eine präzise und fest vorgebbare Beziehung zwischen der Aufnahme- und Abgabeposition und zwischen der Aufnahme- und Abgabeorientierung des Werkstücks besteht (es ist nicht zwingend, dass die Orientierung beibehalten wird).

Als Nächstes wird das Werkstück mit Hilfe der Magnetbänder der Zentriervorrichtung 1 sowie des Fördertischs E rückwärts durch den Linienscanner 200 bewegt, wobei der Verschiebungsweg entgegen der Zuführungsrichtung erfasst wird. Im Übrigen bleibt die Zentriervorrichtung 1 passiv, führt also keine Transportbewegungen in Querrichtung oder Drehbewegungen aus. Im Linienscanner 200 wird das Profil des Werkstücks erfasst. Dieses bildet nun direkt das Sollprofil, welches für die Bestimmung der Korrekturwerte herangezogen wird. Zusätzlich zum eigentlichen Sollprofil fliesst auch der erwähnte Verschiebungsweg in die Bestimmung ein; der entsprechende Wert wird somit zusammen mit dem Sollprofil an die Steuerung der Zentriervorrichtung 1 übermittelt.

Die Erfindung ist nicht auf das dargestellte Ausführungsbeispiel beschränkt. Insbesondere lässt sie sich auch auf Einrichtungen mit mehr als zwei parallelen Tischen verallgemeinern. Dazu können die unteren Ebenen gleich aufgebaut sein wie beim dargestellten Beispiel, während auf dem Träger nun mehr als zwei Wagen mit den entsprechenden höheren Ebenen angeordnet sind.

Die beiden Betriebsarten können zudem anders realisiert werden. Statt je nach Betriebsart jeweils einige Achsen stillzusetzen, können neben der Vorrichtung für den Längstransport weitere Achsen in beiden Betriebsarten eingesetzt werden. So ist es beispielsweise möglich, in derjenigen Betriebsart, in welcher parallel mehrere Werkstücke positioniert werden, auch diejenigen Achsen einzusetzen, welche beide Tische gemeinsam um eine zentrale vertikale Achse drehen, oder es wird eine weitere dynamische Achse vorgesehen, mittels welcher beide Wagen gemeinsam in Querrichtung bewegt werden können, z. B. indem die Linearachse zwischen den bodenseitigen Schienen und dem Rahmen als dynamische Achse ausgebildet wird. Dies ist besonders dann von Vorteil, wenn ein gewisser Anteil der notwendigen Korrekturbewegungen für die beiden Werkstücke übereinstimmt und wenn eine besonders hohe Dynamik gefordert ist. Durch Einsatz der zusätzlichen Achsen lässt sich die Positionierung somit optimieren.

Im Weiteren ist festzuhalten, dass nicht zwingend alle beschriebenen Dreh- und Linearachsen realisiert sein müssen und dass ihre Abfolge, Anordnung und/oder Orientierung unterschiedlich sein kann von der gezeigten Ausführung. Auch die Erfassungseinheit kann anders ausgebildet sein; so kann beispielsweise anstelle einer Auflichteinheit eine Durchlichteinheit zum Einsatz kommen.

Zusammenfassend ist festzustellen, dass durch die Erfindung eine Zentriervorrichtung geschaffen wird, welche einen einfachen Aufbau aufweist und mehrere Werkstücke gleichzeitig neu orientieren kann.

## Patentansprüche

1. Zentriervorrichtung (1) für flächige Werkstücke (H1, H2), insbesondere für in einer Presse (G) zu verarbeitende Platinen aus Blech, umfassend
a) einen ersten, um eine erste vertikale Achse (90) drehbaren Tisch (100.1) zur Werkstückaufnahme;
b) einen zweiten, um eine zweite vertikale Achse (90) drehbaren Tisch (100.2) zur Werkstückaufnahme, wobei der zweite Tisch (100.2) seitlich neben dem ersten Tisch (100.1) angeordnet ist und eine Trageebene des ersten Tischs (100.1) mit einer Trageebene des zweiten Tischs (100.2) im Wesentlichen übereinstimmt; und
c) einen Drehmechanismus (45, 46, 50, 61), welcher derart mit dem ersten Tisch (100.1) und mit dem zweiten Tisch (100.2) mechanisch gekoppelt ist, dass sich der erste und der zweite Tisch (100.1, 100.2) gemeinsam um eine dritte vertikale Achse (50) drehen lassen.

2. Zentriervorrichtung nach Anspruch 1, **gekennzeichnet durch** eine Steuerung, welche zwischen einer ersten Betriebsart und einer zweiten Betriebsart umschaltbar ist, wobei in der ersten Betriebsart eine Orientierung grosser, von beiden Tischen (100.1, 100.2) aufgenommener Werkstücke **durch** Drehen beider Tische (100.1, 100.2) um die dritte Achse (50) erfolgt, und wobei in der zweiten Betriebsart zwei kleinere, von jeweils einem der Tische (100.1, 100.2) aufgenommene Werkstücke gleichzeitig orientiert werden, indem voneinander unabhängige Winkelpositionierungen beider Werkstücke **durch** Drehen der Tische (100.1, 100.2) um die erste bzw. zweite Achse (90) vorgenommen werden.

3. Zentriervorrichtung nach Anspruch 1 oder 2, **dadurch gekennzeichnet, dass** der Drehmechanismus durch einen um die dritte vertikale Achse (50) drehbar an einem Maschinengestell (20, 40) gelagerten Träger (60) gebildet ist, auf welchem sowohl der erste Tisch (100.1) als auch der zweite Tisch (100.2) gelagert sind.

4. Zentriervorrichtung nach einem der Ansprüche 1 bis 3, **dadurch gekennzeichnet, dass** der erste Tisch (100.1) und der zweite Tisch (100.2) eine Vorrichtung (62, 64, 65, 81) zum linearen Bewegen der Werkstücke in einer Richtung quer zu einer Zuführungsrichtung umfassen.

5. Zentriervorrichtung nach Anspruch 4, **dadurch gekennzeichnet, dass** der erste Tisch (100.1) und der zweite Tisch (100.2) am Drehmechanismus (45, 46, 50, 61) quer verschiebbar gelagert sind.

6. Zentriervorrichtung nach einem der Ansprüche 1 bis 5, **dadurch gekennzeichnet, dass** der erste Tisch (100.1) und der zweite Tisch (100.2) eine Vorrichtung (102, 103, 120, 121) zum linearen Bewegen der Werkstücke in einer Zuführungsrichtung umfassen.

7. Zentriervorrichtung nach Anspruch 6, **dadurch gekennzeichnet, dass** die Vorrichtung zum linearen Bewegen der Werkstücke in der Zuführungsrichtung durch Magnetbänder (120) gebildet ist.

8. Zentriervorrichtung nach einem der Ansprüche 1 bis 7, **dadurch gekennzeichnet, dass** die beiden Tische (100.1, 100.2) aneinander gegenüberliegenden Abschnitten jeweils einseitig angeordnete, beabstandete Tragelemente (123, 124) aufweisen, welche derart angeordnet sind, dass sie sich in einem Bereich zwischen den beiden Tischen (100.1, 100.2) verzahnen und **dadurch** eine Tragefläche zwischen den Tischen (100.1, 100.2) bilden.

9. Zentriervorrichtung nach einem der Ansprüche 1 bis 8, **gekennzeichnet durch** eine Erfassungseinrichtung (200) zum Erfassen einer Position und einer Orientierung eines angeförderten Werkstücks.

10. Zentriervorrichtung nach Anspruch 9, **dadurch gekennzeichnet, dass** die Erfassungseinrichtung durch einen Linienscanner (200) gebildet ist, welcher vor dem ersten und dem zweiten Tisch (100.1, 100.2) im Zuführweg der Werkstücke angeordnet ist und sich in Querrichtung über eine Zuführbahn für die Werkstücke erstreckt.

11. Zentriervorrichtung nach Anspruch 10, **gekennzeichnet durch** eine Steuereinrichtung, welche derart ausgebildet und programmiert ist, dass sie aus einem vom Linienscanner (200) erfassten Hell-Dunkel-Profil eines Werkstücks eine mittels der drehbaren Tische (100.1, 100.2) vorzunehmenden Positions- und Winkelkorrektur ermitteln kann.

12. Verfahren zum Einrichten einer Zentriervorrichtung nach einem der Ansprüche 9 bis 11, umfassend folgende Schritte:
a) Einlegen eines Werkstücks eines zu zentrierenden Typs in eine Zielposition in einer Bearbeitungsstation, welche der Zentriervorrichtung nachgeordnet ist;
b) Transportieren des Werkstücks entgegen der Zuführrichtung über den Zentriertisch und durch die Erfassungseinrichtung, indem der Bearbeitungsstation, der Zentriervorrichtung und/oder der Erfassungseinrichtung zugeordnete Transporteinrichtungen rückwärts betrieben werden;
c) Erfassen einer Position und einer Orientierung des Werkstücks durch die Erfassungseinrichtung und Erzeugen eines Sollprofils, welches der erfassten Position und Orientierung des Werkstücks entspricht.
